# EUROPÄISCHE PATENTANMELDUNG

(11) **EP 1 000 788 A2**
(43) Veröffentlichungstag der Anmeldung: **17.05.2000**
(21) Anmeldenummer: 99121934.6
(22) Anmeldetag: 08.11.1999
(51) Int. Cl.: B60J 5/04, E05D 5/02

(54) **Mehrteiliges Verschlussteil, insbesondere Fahrzeugtür, mit einem Innenteil aus Leichtmetallguss**

(30) Priorität: 12.11.1998 DE 19852234
(71) Anmelder: Volkswagen Aktiengesellschaft, 38436 Wolfsburg (DE)
(72) Erfinder: Bosse, Axel, Dipl.-Ing., 38444 Wolfsburg (DE)

(57) **Zusammenfassung**

Ein mehrteiliges Verschlußteil für Kraftfahrzeuge besitzt ein Innenteil aus Leichtmetallguß, insbesondere Magnesiumguß, mit dem mindestens ein Scharnier verbunden ist. In einer Ausnehmung (19) des Innenteils (14) auf der dem Scharnier (12) abgewandten Seite des Innenteils (14) ist eine Blindnietmutter (20) befestigt, die mit einem das Scharnier (12, 13) durchsetzenden Schraubenbolzen (17) zusammenwirkt.

## Beschreibung

Die Erfindung bezieht sich auf ein mehrteiliges Verschlußteil nach dem gemeinsamen Oberbegriff der Patentansprüche 1, 2, 3, 5 und 6.

Bei herkömmlichen Türinnenteilen aus Stahlblech war es zur Scharnierbefestigung möglich und auch üblich, auf das Türinnenteil Muttern aufzuschweißen, mit denen sich die Türscharniere in einfacher Weise verschrauben ließen. Diese Möglichkeit scheidet bei aus Leichtmetallguß gefertigten Türinnenteilen aus.

Eine Fahrzeugtür mit einem Innenteil aus Leichtmetallguß, mit dem mindestens ein Scharnier verbunden ist, ist durch die DE 196 16 788 A1 bekannt geworden. Der als Scharnierträger fungierende, aus Leichtmetallguß bestehende Teil der bekannten Fahrzeugtür soll direkt integrierte Scharniere aufweisen. In welcher Weise die Türscharniere in den Scharnierträger integriert sind, läßt sich der DE 196 16 788 A1 nicht entnehmen.

Aufgabe der vorliegenden Erfindung ist es, mit einfachen Mitteln ein Verschrauben der Scharniere, z. B. Türscharniere, mit aus Leichtmetallguß bestehenden Innenteilen, z. B. Türinnenteilen, zu ermöglichen.

Erfindungsgemäß wird die Aufgabe bei einem Verschlußteil der eingangs bezeichneten Gattung - alternativ - durch die aus den kennzeichnenden Teilen der Patentansprüche 1, 2, 3, 5 und 6 ersichtlichen Merkmale gelöst.

Eine vorteilhafte Ausgestaltung der Lösung nach Patentanspruch 3 ist Patentanspruch 4 zu entnehmen.

Zwar ist es durch die EP 0 579 006 A1 an sich bekannt, zur Befestigung von Scharnierteilen an tragenden Rahmen von Fahrzeugtüren Nietmuttern zu verwenden. Es ist jedoch nicht ersichtlich, daß die bekannte Fahrzeugtür ein Türinnenteil aus Leichtmetallguß besitzt. Der Gegenstand von EP 0 579 006 A1 ist somit gattungsfremd, und es stellt sich dort nicht die der vorliegenden Erfindung zugrundeliegende Problematik.

Durch die DE 31 02 329 A1 ist es zwar auch an sich bekannt, an einem Mittelteil einer Fahrzeugtür Scharniertaschen zwecks Befestigung von Türscharnieren durch Einstecken anzubringen, nicht jedoch am Türinnenteil, bei dem es sich im Gegensatz zur vorliegenden Erfindung nicht um ein tragendes Leichtmetallgußteil, sondern vielmehr lediglich um ein reines nichttragendes Verkleidungsteil aus Kunststoff handelt. Damit ist auch die DE 31 02 329 A1 schon gattungsmäßig nicht einschlägig.

Die Erfindung ist anhand von Ausführungsbeispielen in der Zeichnung veranschaulicht, die im folgenden detailliert beschrieben sind. Es zeigt, jeweils in Schnittdarstellung:
- Fig. 1: eine Ausführungsform einer Scharnierbefestigung mittels Blindnietmutter und Schraubenbolzen,
- Fig. 2: eine Abwandlung der Ausführungsform nach Fig. 1 dahingehend, daß zur Scharnierbefestigung eine Blindnietschraube mit aufgeschraubter Mutter dient,
- Fig. 3: eine andere Ausführungsform einer Scharnierbefestigung, in Darstellung entsprechend Fig. 1,
- Fig. 4: eine weitere Ausführungsform einer Scharnierbefestigung, in Darstellung entsprechend Fig. 1 und 3,
- Fig. 5: einen Schnitt längs der Linie V-V in Fig. 4, und
- Fig. 6: eine weitere Variante einer Scharnierbefestigung, in Darstellung entsprechend Fig. 1, 3 und 4.

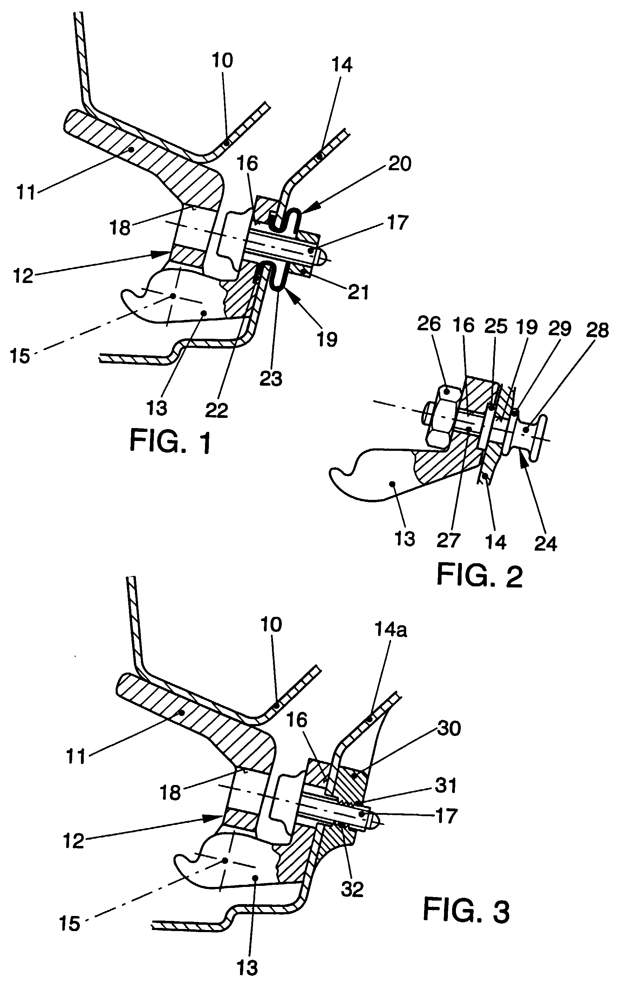

In Fig. 1, 3, 4 und 6 bezeichnet 10 ein Karosserieteil, z. B. Türrahmen, eines Kraftfahrzeuges, z. B. eines PKW. An dem Karosserieteil 10 ist der fahrzeugseitige Teil 11 eines insgesamt mit 12 bezifferten Türscharniers befestigt, z. B. angeschraubt oder angeschweißt. Ein zweiter - türseitiger - Teil 13 des Türscharniers 12 greift an einem - bruchstückhaft dargestellten - Türinnenteil 14 an, welches aus Leichtmetallguß, vorzugsweise Magnesiumguß, besteht. Die Gelenkachse des Türscharniers 12 ist als Schnittpunkt 15 zweier strichpunktierter Linien angedeutet. Der türseitige Scharnierteil 13 weist eine Bohrung 16 auf (Fig. 1, 2 und 6), die von einem Schraubenbolzen 17 durchsetzt ist. Auch der fahrzeugseitige Scharnierteil 11 besitzt eine - koaxial zur Bohrung 16 liegende - Bohrung 18, damit der Schraubenbolzen 17 von außen zugänglich ist.

Die Besonderheit der Ausführungsform nach Fig. 1 besteht darin, daß in einer koaxial zur Bohrung 16 des Türscharniers 12 liegenden Ausnehmung 19 des Türinnenteils 14 ein Hohlniet 20 mit an seinem Ende befestigter Blindnietmutter 21 angeordnet ist. Der Hohlniet 20 übergreift hierbei mit einem flanschartigen Rand 22 das Türinnenteil 14. Durch das Einschrauben des Schraubenbolzens 17 in die Blindnietmutter 21 verformt sich der Hohlniet 20 - wie in Fig. 1 gezeigt - zu einem Wulst 23, wodurch gleichzeitig das türseitige Scharnierteil 13 an dem Türinnenteil 14 fixiert wird.

Bei der Ausführungsform nach Fig. 2 ist die Ausnehmung 19 des Türinnenteils 14 von einem Blindnietschraubenbolzen 24 durchsetzt, der sich hierbei mit einem Bund 25 an der Außenseite des Türinnenteils 14 abstützt. Durch Aufschrauben einer Mutter 26 auf den Gewindeschaft 27 des Blindnietschraubenbolzens 24 bildet der mit 28 bezifferte Hohlnietteil des Blindnietschraubenbolzens 24 einen Wulst 29, wodurch gleichzeitig die Fixierung des türseitigen Scharnierteils 13 an dem Türinnenteil 14 erfolgt.

Die Variante nach Fig. 3 entspricht weitgehend der Ausführungsform nach Fig. 1. Der Unterschied gegenüber letzterer besteht darin, daß auf der dem Türscharnier 12 abgewandten Seite des Türinnenteils 14a eine Verstärkung 30 mit einer Bohrung 31 angegossen ist, in der ein Gewindeeinsatz 32 als Mutter für den das Türscharnier 12, 13 durchsetzenden Schraubenbolzen 17 befestigt ist. Die genannten konstruktiven Maßnahmen machen den Einsatz eines Hohlniets mit einer Blindnietmutter entbehrlich.

Der Gewindeeinsatz 32 läßt sich vorteilhafterweise automatisch einschrauben und kann selbstschneidend ausgebildet sein, wodurch die vorherige Einarbeitung eines Gewindes in die Bohrung 31 der Verstärkung 30 entfällt.

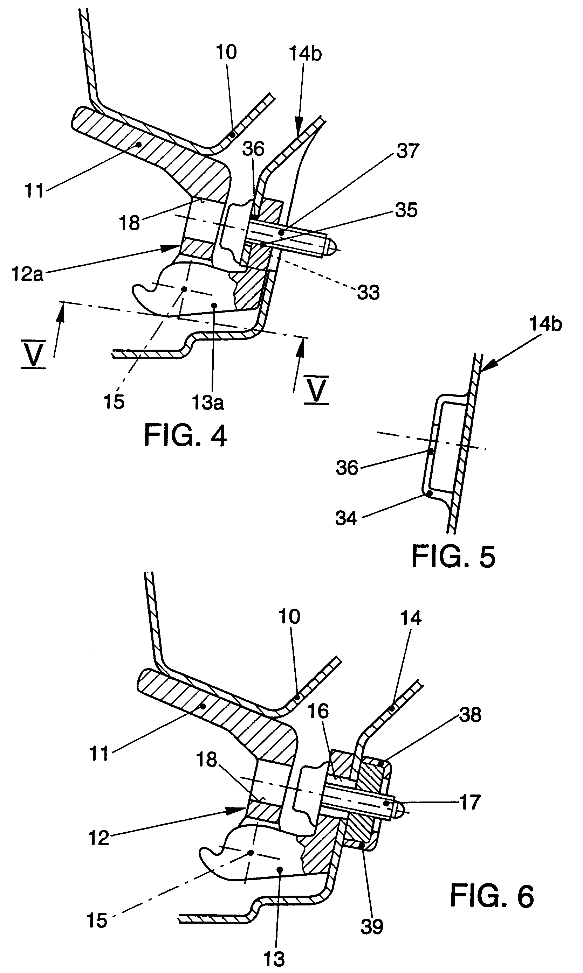

Die Besonderheit der Variante nach Fig. 4 und 5 besteht in folgendem. An das Türinnenteil 14b ist ein eine Einschuböffnung 33 zum Einstecken des türseitigen Scharnierteils 13a aufweisender Schuh 34 angegossen. Der in den Schuh 34 eingesteckte Scharnierteil 13a weist eine Gewindebohrung 35 auf, die mit einem eine Ausnehmung 36 im Schuh 34 durchsetzenden Schraubenbolzen 37 zusammenwirkt.

Bei der Ausführungsform nach Fig. 6 besteht die Besonderheit darin, daß auf der dem Türscharnier 12 abgewandten Rückseite des Türinnenteils 14 eine Aufnahme 38 angegossen ist, in die eine Mutter 39 eingeklebt ist, die mit dem das Türscharnier durchsetzenden Schraubenbolzen 17 zusammenwirkt. Die Aufnahme 38 weist eine Bohrung 40 auf, um den Durchtritt des Schraubenbolzens 17 zu ermöglichen.

Selbstverständlich ist die vorliegende Erfindung nicht auf Fahrzeugtüren beschränkt, sondern ist insbesondere auch für Fahrzeugdeckel und -klappen geeignet.

## Patentansprüche

1. Mehrteiliges Verschlußteil für Kraftfahrzeuge mit einem Innenteil aus Leichtmetallguß, insbesondere Magnesiumguß, mit dem mindestens ein Scharnier verbunden ist, **dadurch gekennzeichnet**, daß in einer Ausnehmung (19) des Innenteils (14) auf der dem Scharnier (12) abgewandten Seite des Innenteils (14) eine Blindnietmutter (20) befestigt ist, die mit einem das Scharnier (12, 13) durchsetzenden Schraubenbolzen (17) zusammenwirkt (Fig. 1).

2. Mehrteiliges Verschlußteil für Kraftfahrzeuge mit einem Innenteil aus Leichtmetallguß, insbesondere Magnesiumguß, mit dem mindestens ein Scharnier verbunden ist, **dadurch gekennzeichnet**, daß in einer Ausnehmung (29) des Innenteils (14) auf der dem Scharnier (12) abgewandten Seite des Innenteils (14) ein Blindnietschraubenbolzen (24) befestigt ist, der das Scharnier (12, 13) in einer Ausnehmung (16) durchsetzt und mit einer rückseitig des Scharniers (12, 13) aufgeschraubten Mutter (26) zusammenwirkt (Fig. 2).

3. Mehrteiliges Verschlußteil für Kraftfahrzeuge mit einem Innenteil aus Leichtmetallguß, insbesondere Magnesiumguß, mit dem mindestens ein Scharnier verbunden ist, **dadurch gekennzeichnet**, daß auf der dem Scharnier (12) abgewandten Seite des Innenteils (14a) eine Verstärkung (30) mit einer Bohrung (31) angegossen ist, in der ein Gewindeeinsatz (32) als Mutter für einen das Scharnier (12, 13) durchsetzenden Schraubenbolzens (17) befestigt ist (Fig. 3).

4. Mehrteiliges Verschlußteil nach Anspruch 3, **dadurch gekennzeichnet**, daß der Gewindeeinsatz (32) selbstschneidend ausgebildet und automatisch in die Bohrung (31) der Verstärkung (30) einschraubbar ist.

5. Mehrteiliges Verschlußteil für Kraftfahrzeuge mit einem Innenteil aus Leichtmetallguß, insbesondere Magnesiumguß, mit dem mindestens ein Scharnier verbunden ist, **dadurch gekennzeichnet**, daß an das Innenteil (14b) ein eine Einschuböffnung (33) zum Einstecken des Scharniers (12a, 13a) aufweisender Schuh (34) angegossen ist, und daß ein in den Schuh (34) eingesteckter Scharnierteil (13a) eine Gewindebohrung (35) aufweist, die mit einem eine Ausnehmung (36) im Schuh (34) durchsetzenden Schraubenbolzen (37) zusammenwirkt (Fig. 4 und 5).

6. Mehrteiliges Verschlußteil für Kraftfahrzeuge mit einem Innenteil aus Leichtmetallguß, insbesondere Magnesiumguß, mit dem mindestens ein Scharnier verbunden ist, **dadurch gekennzeichnet**, daß auf der dem Scharnier (12) abgewandten Rückseite des Innenteils (14) eine Aufnahme (38) angegossen ist, in die eine Mutter (39) eingeklebt ist, die mit einem das Scharnier durchsetzenden Schraubenbolzen (17) zusammenwirkt (Fig. 6).
